# EUROPÄISCHE PATENTSCHRIFT

(11) **EP 0 659 502 B1**
(45) Veröffentlichungstag und Bekanntmachung des Hinweises auf die Patenterteilung: **06.11.1996**
(21) Anmeldenummer: 93120370.7
(22) Anmeldetag: 17.12.1993
(51) Int. Cl.: B21J 7/14, B30B 7/04, B23D 31/00

(54) **Anlage zum Streckschmieden von Rohblöcken**
Installation for stretch-forging of ingots
Installation pour forgeage par étirage de lingots

(43) Veröffentlichungstag der Anmeldung: 28.06.1995
(73) Patentinhaber: SMS HASENCLEVER GmbH, D-40225 Düsseldorf (DE)
(72) Erfinder: Schubert, Hans-Albert, D-40591 Düsseldorf (DE); Schubert, Peter, D-41564 Kaarst (DE)
(74) Vertreter: Hemmerich, Friedrich Werner

(56) Entgegenhaltungen:
- EP-A- 0 510 980
- EP-A- 0 566 818
- US-A- 3 483 781

## Beschreibung

Bei der Herstellung von Halbzeug aus hochlegierten Werkstoffen in kleinen Losgrößen werden aus wirtschaftlichen und technischen Gründen in Kokillen gegossene Rohblöcke als Ausgangsmaterial eingesetzt, die durch Freiform-Streckschmieden zu Vorblöcken umgeformt werden. Im Zuge des Streckschmiedens ist es erforderlich den Block an seinen Enden ein- oder mehrmals zu schopfen, d.h. die Enden minderer Qualität abzutrennen. Soweit zum Streckschmieden Schmiedepressen mit einem unteren und einem bewegten oberen Sattel eingesetzt werden, ist das Schopfen durch Austausch von Schmiedesätteln gegen Messersättel einfach zu bewerkstelligen.

Ihrer hohen Umformleistung wegen sind Radial-Umform-Schmiedemaschinen, die mit zumeist vier radial angeordneten Werkzeugen gleichzeitig auf das Schmiedestück einwirken, besonders auch für das Streckschmieden geeignet, insbesondere, wenn schwer umformbare oder nur in einem engen Temperaturfenster umformbare Werkstoffe zur Verschmiedung anstehen. Da der Einsatz von Messersätteln in Radial-Umform-Schmiedemaschinen kaum praktikabel ist, muß das Schopfen außerhalb der Linie erfolgen, in der die Radial-Umform-Schmiedemaschine, ein Manipulator oder zwei zu beiden Seiten der Schmiedemaschine angeordnete Manipulatoren, sowie Chargiereinrichtungen zum An- und Abtransport und gegebenenfalls Stützen und Drehen der Blöcke zu einer Anlage zusammengefaßt sind. Dadurch ist das Schopfen mit erheblichem Zeit- und Wärmeverlust verbunden, die die Erfindung zu vermeiden sucht.

Die Erfindung bezieht sich auf eine solche, mit einer Radial-Umform-Schmiedemaschine ausgestattete Anlage zum Streckschmieden von Rohblöcken, die sich erfindungsgemäß kennzeichnet durch eine mit der Schmiedemaschine integrierte Schopfschere. Durch diese Integration von Schmiedemaschine und Schopfschere ist es möglich, die Schopfschere in die Linie der Anlage so einzubringen, daß der Schmiedevorgang und die dazu nötige Manipulation des Schmiedeblocks ungehindert möglich ist.

Die Integration von Schmiedemaschine und Schopfschere gestaltet sich besonders raumsparend und somit besonders vorteilhaft, wenn gemäß einem weiteren Merkmal der Erfindung Schmiedemaschine und Schopfschere mit einem ihnen gemeinsamen Rahmen versehen sind.

Als Ausführungsbeispiel ist in
- Figur 1: in einer Seitenansicht und in
- Figur 2: in einer Aufsicht eine Schmiedeanlage dargestellt die eine Radial-Umform-Schmiedemaschine mit integrierter Schopfschere umfaßt, die in größerem Maßstab in
- Figur 3: in einer Stirnansicht und in
- Figur 4: in einer Seitenansicht nochmals dargestellt sind.

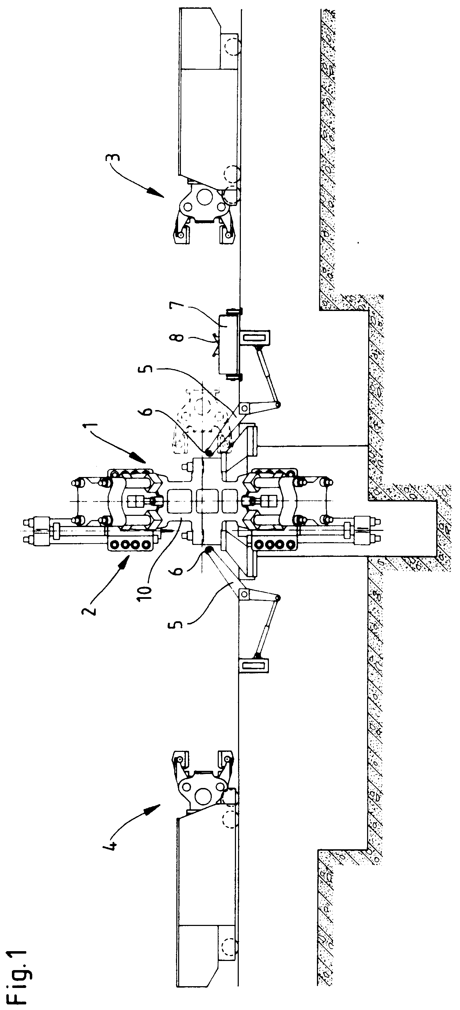

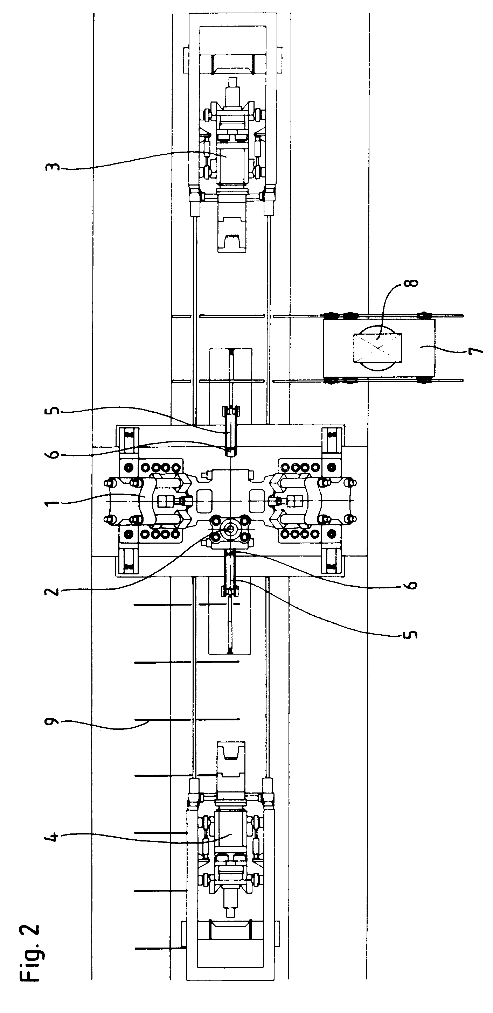

Die in den Figuren 1 und 2 dargestellte Schmiedeanlage besteht aus einer Schmiedemaschine 1 mit integrierter Schopfschere 2 mit denen in einer Linie zwei Manipulatoren 3 und 4 angeordnet sind. Ergänzend sind in Linie mit diesen Chargiereinrichtungen, im Ausführungsbeispiel von Schwenkarmen 5 getragene Stützrollen 6 in unmittelbarer Nähe beiderseits der Schmiedemaschine 1 und ein Blockwagen 7 mit einem drehbaren, muldenförmigen Auflager 8 für einen an- oder abzuförderndes Schmiedestück. Für den Abtransport langer Schmiedestücke können Quertransporteinrichtungen 9 vorgesehen werden.

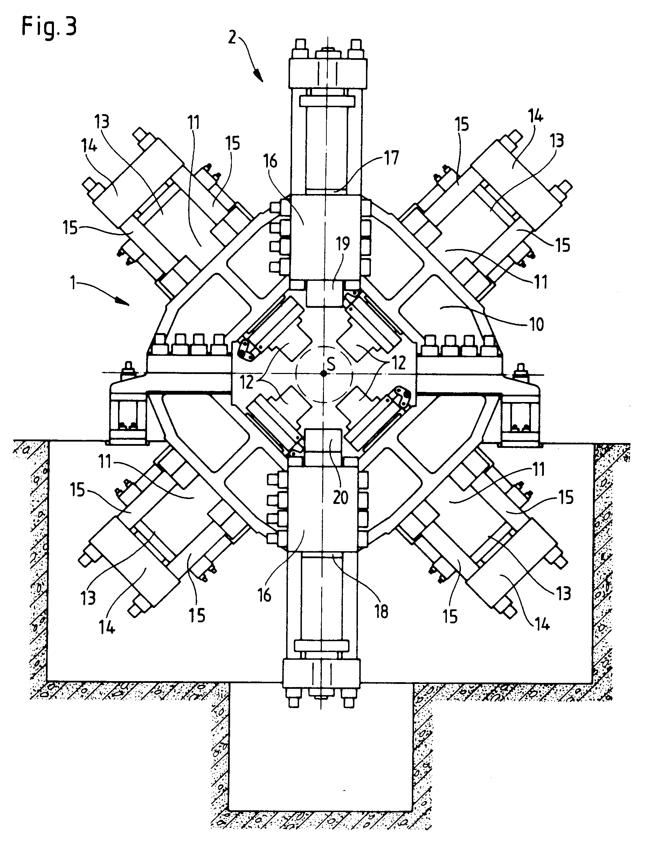

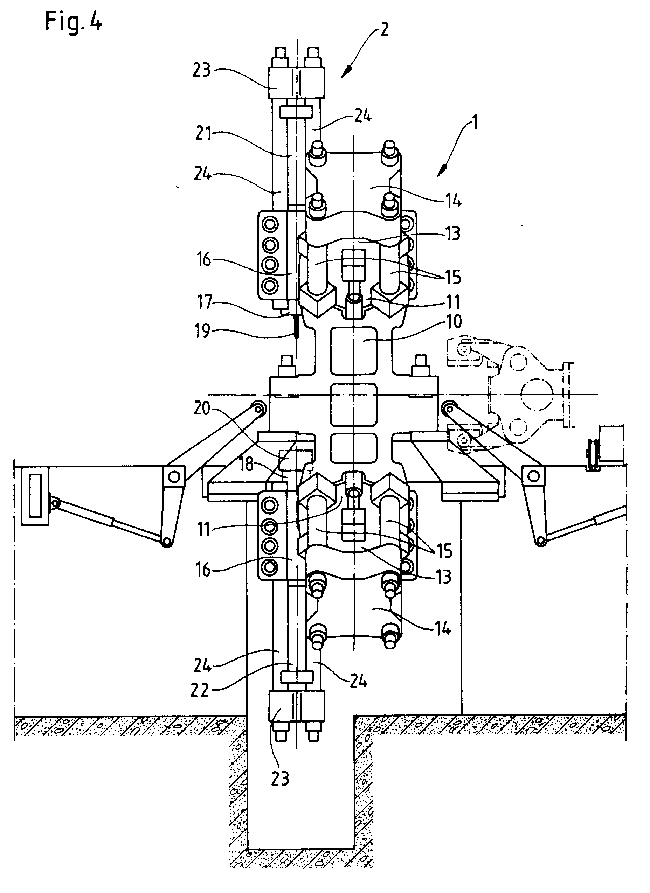

Die Schmiedemaschine 1 besteht - zu den Einzelheiten siehe Figur 3 und 4 - aus einem Rahmen 10, in dem vier Stößel 11 geführt sind, die stirnseitig mit Werkzeugen 12 besetzt sind. Die Stößel 11 sind radial zur Systemachse S beweglich in einer zur Systemachse senkrechten Ebene X-förmig, um 90° zueinander versetzt angeordnet. Angetrieben sind die Stößel 11 von Kolben-Zylinder-Einheiten 13, die sich an Traversen 14 abstützen, welche durch vorgespannte Säulen 15 mit dem Rahmen 10 verbunden sind. Der Rahmen 10 ist an einer Stirnseite senkrecht über und unter der Systemachse mit angeformten Fassungen 16 versehen, die zur Führung eines oberen und eines unteren Scherwerkzeugträgers 17, 18 dienen. Gestützt durch einen Sattel 20 am Scherwerkzeugträger 18 kann ein Schmiedeblock mit einem Messer 19 am Scherwerkzeugträger 17 durchtrennt, beispielsweise ein Schopfstück abgetrennt werden. Bewegt wird der Scherwerkzeugträger 17 mit seinem Messer 19 von einer Kolben-Zylinder-Einheit 21 und der Scherwerkzeugträger 18 mit seinem Sattel 20 von einer Kolben-Zylinder-Einheit 22, wobei die KolbenZylinder-Einheiten 21 und 22 jeweils von einer Traverse 23 abgestützt sind, die über Säulen 24 mit der zugehörigen Fassung 16 verbunden sind.

Je nach Schmiedeprogramm kann die Schmiedeanlage auch lediglich mit einem Manipulator 3 bestückt sein, wobei dann eventuell vorgesehene Quertransporte im Bereich zwischen der Schmiedemaschine 1 und dem Manipulator 3 anzuordnen wären.

## Patentansprüche

1. Aus einer Radial-Umform-Schmiedemaschine (1), mindestens einem in Linie zugeordneten Manipulator (3) sowie Chargiereinrichtungen (5,6,7,8,9) zum An- und Abtransport der Schmiedblöcke bestehende Anlage zum Streckschmieden von Rohblöcken,
**gekennzeichnet durch**
eine mit der Schmiedemaschine (1) integrierte Schopfschere (2).

2. Schmiedemaschine zu einer Streckschmiedeanlage nach Anspruch 1,
**dadurch gekennzeichnet**,
daß die Schmiedemaschine (1) und die Schopfschere (2) einen gemeinsamen Rahmen (10) aufweisen.

## Claims

1. A plant for stretch-forging ingots, comprising a radial-forming forging machine (1), at least one manipulator (3) arranged in line as well as charging devices (5, 6, 7, 8, 9) for the supply and removal of the forged billets, **characterized by** a pair of cropping shears (2) integrated with the forging machine (1).

2. A forging machine for a stretch-forging plant according to Claim 1, **characterized in that** the forging machine (1) and the cropping shears (2) are provided with a common frame (10).

## Revendications

1. Installation pour le forgeage dégrossisseur de lingots, constituée d'une machine à forger à formage radial (1), d'au moins un manipulateur (3) disposé en ligne ainsi que de dispositifs de chargement (5,6,7,8,9) pour le transport d'amenée et d'évacuation des lingots à forger,
caractérisée par
une cisaille à ébouter (2) intégrée avec la machine à forger (1).

2. Machine à forger pour une installation de forgeage dégrossisseur selon la revendication 1,
caractérisé
par le fait que la machine à forger (1) et la cisaille à ébouter (2) présentent un cadre commun (10).
